# EUROPÄISCHE PATENTSCHRIFT

(11) **EP 1 122 222 B1**
(45) Veröffentlichungstag und Bekanntmachung des Hinweises auf die Patenterteilung: **27.04.2005**
(21) Anmeldenummer: 01102442.9
(22) Anmeldetag: 03.02.2001
(51) Int. Cl.: C04B 7/32

(54) **Manganhaltiger Tonerdezement**
High-alumina cement comprising manganese
Ciment alumineux comprenant du manganèse

(30) Priorität: 05.02.2000 DE 10005221
(43) Veröffentlichungstag der Anmeldung: 08.08.2001
(73) Patentinhaber: ARDEX GMBH, D-58453 Witten-Annen (DE)
(72) Erfinder: Pöllmann, Herbert, Prof. Dr. Dr., 90765 Fürth (DE); Oberste-Padtberg, Rüdiger, Dr. rer. nat., 42111 Wuppertal (DE)
(74) Vertreter: Minderop, Ralph H., Dr. rer. nat.

(56) Entgegenhaltungen:
- WO-A-00/03958
- DE-C- 143 604
- FR-A- 1 580 577
- DATABASE WPI Section Ch, Week 197920 Derwent Publications Ltd., London, GB; Class L02, AN 1979-38330B XP002167313 & SU 614 052 A (MOSC CHEM TECH INST), 2. Juni 1978 (1978-06-02)
- ZKG INTERN, Bd. 36, Nr. 7, 1983, Seiten 402-408, 1983

## Beschreibung

Die Erfindung betrifft einen manganhaltigen Tonerdezement und ein Verfahren zu dessen Herstellung.

Tonerdezemente sind anorganische Bindemittel, die hauptsächlich Al₂O₃ (Tonerde), CaO und FeO enthalten und darüber hinaus in unterschiedlichen Konzentrationen Fe₂O₃, SiO₂ und andere Bestandteile enthalten können. Hauptminerale von Tonerdezementen sind Monocalciumaluminat (CaO•Al₂O₃), Mayenit (12CaO•7Al₂O₃), Tetracalciumaluminatferrat (4CaO•Al₂O₃•Fe₂O₃), Dicalciumsilikat (2CaO•SiO₂) sowie Gehlenit (2CaO•Al₂O₃•SiO₂). Verantwortlich für die Erhärtung von Tonerdezementen sind Calciumaluminate, insbesondere Monocalciumaluminat.

Tonerdezemente werden durch Vermischen von Bauxit und Kalkstein in einem vorgegebenen Verhältnis, gegebenenfalls mit Quarzsand, anschließendem Sintern in einem Drehrohrofen oder Schmelzen in einem Schmelzofen und Brechen und Mahlen des erbrannten Guts hergestellt. Ein solches Verfahren ist beispielsweise in der DE 197 27 979 C2 beschrieben.

Tonerdezemente werden hauptsächlich in der Feuerfest- und Baustoffindustrie verwendet. Sie werden ferner in der Stahlindustrie und bei der Abwasserbehandlung eingesetzt. Bei der Herstellung von Tonerdezement, insbesondere solchem für die Baustoffindustrie, ist es erwünscht, den Anteil des für die Festigkeitsentwicklung wichtigsten Bestandteils, nämlich Monocalciumaluminat, zu maximieren. So beschreibt die DE 43 30 596 A1 ein Verfahren zur Verringerung des Anteils an Mayenit in Tonerdezementen für bestimmte bauchemische Produkte.

Aufgrund des relativ hohen Preises von geeigneten Al₂O₃ enthaltenden Rohstoffen zur Herstellung von Tonerdezement, meist werden Bauxite mit unterschiedlichen Anteilen an Fe₂O₃ eingesetzt, ist auch der marktübliche Tonerdezement, verglichen mit anderen Bindemitteln wie Portlandzement und Anhydrit, teuer.

Die DE 1 083 740 betrifft ein Verfahren zur Herstellung von feuerfesten Tonerdezementen, die 5 bis 25% Sesquioxide von Mangan, Chrom und Titan enthalten. Die DE 143 604 betrifft die Herstellung eines dem Meerwasser widerstehenden Zements aus kieseligen Kalken, Eisenoxid und Manganoxid, wobei oxidische Eisenerze oder Chromerzrückstände eingesetzt werden.

Die SU 614 052 betrifft einen Klinker für einen Portlandzement, der Calciumaluminatferratmangangate mit 20 bis 22 Gew.% Al₂O₃, 22 bis 24 Gew.% Fe₂, O₃, 9 bis 12 Gew.% Mn₂O₃ und 42 bis 49 Gew.% CaO aufweist. Der Klinker wird durch Erhitzen geeigneter manganhaltiger Verbindungen auf mindestens 1.250°C und anschließendes Abkühlen unter oxidativen Bedingungen hergestellt. Die vorgeschlagenen Zemente sollen eine hohe Festigkeit aufweisen.

Der Erfindung liegt daher die Aufgabe zugrunde, Tonerdezemente bereitzustellen, die den Einsatz von preisgünstigeren Einsatzstoffen erlauben, bei einer möglichst geringen Temperatur herstellbar sind und darüber hinaus zum Einsatz in der bauchemischen Industrie sowie im Umweltbereich zur Immobilisierung von Schadstoffen und Entschwefelung von Abwässern und Metallen geeignet sind.

Gelöst wird diese Aufgabe durch einen Tonerdezement, der das Mineral 2CaO•(xAl₂O₃, yMn₂O₃, zFe₂O₃) oder die gleiche Zusammensetzung in glasiger Form enthält. In der zuvor genannten Definition bedeuten x eine Zahl kleiner 2, y eine Zahl von 0,1 bis 1,4 und z kleiner 4. Glasig bedeutet in diesem Zusammenhang amorph. Ein solcher Tonerdezement enthält 1 bis 50 Gew.%, vorzugsweise 10 bis 35 Gew.% Mangan, berechnet als MnO und bezogen auf das Gewicht des modifizierten Tonerdezements. Mangan kann hierzu in allen Oxidationsstufen in dem Tonerdezement vorliegen.

Bezogen auf das Mineral 2CaO•(xAl₂O₃,yMn₂O₃, zFe₂O₃) sind 5 bis 25 Mol%, vorzugsweise 5 bis 10 Mol%, eines Manganoxids, beispielsweise Mn₂O₃, in dem erfindungsgemäßen modifzierten Tonerdezement enthalten. Ein Aluminiumoxid, beispielsweise Al₂O₃, ist in einer Menge von 10 bis 70 Mol%, vorzugsweise 25 bis 59 Mol%, enthalten. Ein Eisenoxid, beispielsweise Fe₂O₃, kann in dem Tonerdezement in einer Menge von 1 bis 40 Mol%, vorzugsweise 5 bis 25 Mol%, enthalten sein. Das Molverhältnis Calciumoxid zu der Summe der Metalloxide kann 0,9 bis 2,5 zu 1 betragen.

Gegenstand der Erfindung ist ferner ein Verfahren zur Herstellung eines Mangan enthaltenden Tonerdezements. Die Herstellung erfolgt durch Vermischen eines Al₂O₃ und Eisenoxid enthaltenden Einsatzstoffs mit Kalkstein oder anderen Ca enthaltenden Rohstoffen und/oder Abfallstoffen sowie Mn enthaltenden Materialien oder Verbindungen in einer Menge, die dazu führt, daß das nach dem Brennen erhaltene Material, das Brennprodukt, 1 bis 50 Gew.% Mn jedweder Oxidationsstufe, berechnet als MnO und bezogen auf das Gewicht des Brennprodukts, enthält. Anschließend wird das Brennprodukt gesintert oder geschmolzen, gekühlt, gebrochen und gemahlen. Das Eisenoxid kann FeO oder Fe₂O₃ sein.

Überraschend wurde festgestellt, daß der erfindungsgemäße Tonerdezement in vergleichbarer Geschwindigkeit wie bekannte Tonerdezemente abbindet und auch die Festigkeitsentwicklung wie bei bekannten Tonerdezementen verläuft. Die Brenntemperatur liegt im allgemeinen um 100°C oder mehr niedriger als die für herkömmliche Tonerdezemente erforderliche Brenntemperatur. Ferner ist der erfindungsgemäße Tonerdezement im Hinblick auf die Einsatzstoffe kostengünstiger erhältlich als bekannte, nur auf Bauxit und Kalkstein beruhende Tonerdezemente. Der erfindungsgemäße Tonerdezement ist nicht hochfeuerfest. Der Erweichungspunkt liegt bei etwa 1000 °C.

Die Monocalciumaluminat entsprechende Manganverbindung Monocalciummanganat ist nicht reaktiv. Dies ist möglicherweise der Grund dafür, daß frühere Versuche zur Substitution von Al₂O₃ durch Manganoxide, sofern solche überhaupt erfolgten, gescheitert sind. Erfindungsgemäß wurde festgestellt, daß erst komplexere Verbindungen, die CaO, Mn-Oxide und Al₂O₃ und/oder Fe₂O₃ enthalten, reaktiv sind.

Gemäß einer bevorzugten Ausführungsform enthält der erfindungsgemäße Tonerdezement 10 bis 35 Gew.% Mangan, berechnet als MnO und bezogen auf das Gewicht des trockenen Zements.

Der erfindungsgemäße Tonerdezement enthält eine oder mehrere der Phasen Calciumaluminatferratmanganat, Calciummanganat, Calciumaluminatferratsilicatmanganat, Calciumferratmanganat, Calciummangansilikat, Calciumaluminatmanganat und Calciumaluminiummangansulfat.

Zur Herstellung der erfindungsgemäßen Tonerdezemente werden Mangan enthaltende Einsatzstoffe verwendet. Mangan enthaltende Einsatzstoffe können manganhaltige Rohstoffe oder manganhaltige Reststoffe sein. Manganhaltige Rohstoffe sind beispielsweise natürlich vorkommende Manganerze, Manganoxid, Mangancarbonat, Mangansulfate und andere Mangansalze. Manganhaltige Reststoffe fallen unter anderem bei der Manganerzaufbereitung oder Manganerzverarbeitung an.

Hauptbestandteile dieser Mangan enthaltenden Einsatzstoffe sind Manganmineralien wie Birnessit, Braunit, Bixbyit, Feitknechtit, Groutit, Hausmannit, Hollandit, Kryptomelan, Lithiophorit, Manganit, Marokit, Pyrolosit, Rancieit, Rhodochrosit und Tokorokit.

Diese Manganeinsatzstoffe werden als Ersatz für einen Teil der Aluminium-Komponente der Rohmaterialmischung zugesetzt, die aufgrund ihrer Zusammensetzung nach thermischer Behandlung bei Temperaturen von 1100° bis 1550°C die Mineralien CaO•2Al₂O₃, CaO•Al₂O₃, 2CaO•Al₂O₃, 12CaO•7Al₂O₃, 4CaO•Al₂O₃•Fe₂O₃ und 2CaO•Al₂O₃•SiO₂ bilden würden.

Aluminiumeinsatzstoffe sind Bauxit, die bei der Gewinnung von Sekundäraluminium anfallende Salzschlacke und Aluminiumkrätze, die bei der Sulfatfällung aus Abwässern anfallenden Ettringitschlämme. Vorzugsweise wird Bauxit verwendet. Eiseneinsatzstoffe sind übliche, in der Zementindustrie FeO oder Fe₂O₃ enthaltende Einsatzstoffe. Calciumquelle ist Kalkstein oder andere Calcium enthaltenden Roh- und Reststoffe.

Zur Herstellung der erfindungsgemäßen modifizierten Tonerdezemente werden beispielsweise die Ausgangsmaterialien Bauxit, Kalkstein, Mangankomponente und Eisenkomponente in einem Verhältnis zusammengegeben, das ein Produkt der angegebenen Zusammensetzung erhalten wird. Das Ausgangsmaterial wird homgenisiert, bei 1000 bis 1500 °C, vorzugsweise 1100 bis 1350 °C, gebrannt, gekühlt und gemahlen.

Zur Verarbeitung können dem erfindungsgemäßen Tonerdezement mineralische Füllstoffe zugesetzt sein. Zur Steuerung der Abbindegeschwindigkeit können handelsübliche Zementverzögerer und/oder Abbindebeschleuniger eingesetzt werden. Weitere bekannte Additive, die dem erfindungsgemäßen Tonerdezement zugesetzt sein können, sind wasserreduzierende Zusätze, die Wasserretention erhöhende oder die Verformbarkeit des ausgehärteten Baustoffs beeinflussende Zusätze.

Die folgenden Beispiele dienen der weiteren Erläuterung der Erfindung

### Beispiele

Folgende natürlich vorkommende Rohstoffe mit den nachfolgend angegebenen chemischen Analysen wurden zur Zementherstellung eingesetzt:

| | | |
|---|---|---|
| Bauxit | Al₂O₃ | 68,3 Gew.% |
| | SiO₂ | 2,2 Gew.% |
| | CaO | 0,6 Gew.% |
| | Fe₂O₃ | 11,5 Gew.% |
| | TiO₂ | 3,2 Gew.% |
| | Glühverlust | 14,2 Gew.% |
| | | |
| Kalkstein | CaCO₃ : | 98,2 Gew.% |
| | SiO₂ : | 0,8 Gew.% |
| | MgO: | 0,3 Gew.% |
| | Sonstige: | 0,7 Gew.% |
| Manganoxid | MnO₂ : | 98,3 Gew.% |
| | SiO₂ : | 0,7 Gew.% |
| | Fe₂O₃ : | 1,0 Gew.% |

### Beispiel 1

Eine Rohmehlmischung, bestehend aus
- 40 Gewichtsteilen Kalkstein,
- 30 Gewichtsteilen Bauxit und
- 30 Gewichtsteilen Manganerz,
wurde gemahlen, homogenisiert und anschließend bei 1285°C eine Stunde in einem elektrisch beheizten Ofen gebrannt. Das Brenngut wurde mittels Röntgenbeugungsanalyse untersucht. Es enthielt Calciumaluminate, Calciumaluminatferrate, Calciumaluminatmanganat, Calciumferratmanganate und Calciummanganate als Hauptbestandteile.

Zu Hydratationsuntersuchungen wurde das erbrannte Material auf eine zementübliche Feinheit von etwa 3200 cm²/g nach Blaine aufgemahlen und mit Wasser vermischt (Wasser/Feststoff-Verhältnis 0,44). Nach 16 Stunden war das Material ausgehärtet. Bei wärmeflußcalorimetrischen Untersuchungen dieser Suspension zeigte sich, daß die innerhalb von 20 Stunden freigesetzte Reaktionswärme größer war als die einer vergleichbaren Suspension auf der Basis von handelsüblichem Tonerdezement.

Auch der Einsatz des aufgemahlenen Brennprodukts in handelsüblichen Tonerdezement/Calciumsulfatgemischen zeigte, daß dieses Produkt sich als Tonerdezementersatz eignet. Es bindet in vergleichbarer Geschwindigkeit ab, die Abbindegeschwindigkeit läßt sich durch handelsübliche Zementverzögerer und -beschleuniger steuern.

Der Einsatz dieses Produkts in einem Bindemittel, bestehend aus
- 65 Gew.% aufgemahlenes Brenngut,
- 12 Gew.% handelsüblichem Portlandzement,
- 22 Gew.% Calciumsulfathalbhydrat und
- 1 Gew.% handelsüblichen organischen und anorganischen Zementadditiven,
wurde in einem Mörtel getestet. Hierzu wurde dieses Bindemittel mit der vierfachen Menge Sand (0-8mm) gestreckt und mit einem Wasser/Bindemittel-Verhältnis von 0,4 gemischt. Es ergaben sich nach unterschiedlichen Lagerungszeiten bei 20°C/65 % relativer Luftfeuchtigkeit folgende Festigkeiten:

| | |
|---|---|
| Biegezugfestigkeit (nach 1 Tag) | 3,6 N/mm², |
| Druckfestigkeit (nach 1 Tag) | 16,4 N/mm², |
| | |
| Biegezugfestigkeit (nach 7 Tagen) | 5,7 N/mm², |
| Druckfestigkeit (nach 7 Tagen) | 28,3 N/mm², |
| | |
| Biegezugfestigkeit (nach 28 Tagen) | 8,7 N/mm², |
| Druckfestigkeit (nach 28 Tagen) | 37,2 N/mm². |

### Beispiel 2

Eine Rohmehlmischung, bestehend aus
- 50,0 Gewichtsteilen Kalkstein,
- 40,0 Gewichtsteilen Bauxit und
- 10,0 Gewichtsteilen Manganerz,
wurde gemahlen (Feinheit: 20 Gew.% < 0,09 mm), homogenisiert und anschließend bei 1275 °C eine Stunde in einem elektrisch beheizten Ofen gebrannt. Das Brenngut wurde mittels Röntgenbeugungsanalyse untersucht. Es enthielt Calciumaluminate, Calciumaluminatferrate, Calciumaluminatmanganat, Calciumferratmanganate und Calciummanganate als Hauptbestandteile.

Zu anwendungstechnischen Untersuchungen wurde das erbrannte Material auf eine zementübliche Feinheit von etwa 3200 cm²/g nach Blaine aufgemahlen und mit Wasser vermischt (Wasser/Feststoff-Verhältnis 0,44). Nach 16 Stunden war das Material ausgehärtet. Bei wärmeflußcalorimetrischen Untersuchungen dieser Suspension zeigte sich, daß die innerhalb von 20 Stunden freigesetzte Reaktionswärme größer war als die einer vergleichbaren Suspension auf der Basis von handelsüblichem Tonerdezement.

Auch der Einsatz dieses aufgemahlenen Brennprodukts in handelsüblichen Tonerdezement/Calciumsulfatgemischen zeigte, daß dieses Produkt sich als Tonerdezementersatz eignet. Es bindet in vergleichbarer Geschwindigkeit ab, und die Abbindegeschwindigkeit läßt sich durch handelsübliche Zementverzögerer und -beschleuniger steuern.

Der Einsatz dieses Produkts in einem Bindemittel, bestehend aus
- 65 Gew.% aufgemahlenem Brenngut,
- 12 Gew.% handelsüblichem Portlandzement,
- 22 Gew.% Calciumsulfathalbhydrat und
- 1 Gew.% handelsüblichen organischen und anorganischen Zementadditiven,
wurde in einem Mörtel getestet. Hierzu wurde dieses Bindemittel mit der vierfachen Menge Sand (0 - 8 mm) gestreckt und mit einem Wasser/Bindemittel-Verhältnis von 0,4 gemischt. Es ergaben sich nach unterschiedlichen Lagerungszeiten bei 20°C/65 % relativer Luftfeuchtigkeit folgende Festigkeiten:

| | |
|---|---|
| Biegezugfestigkeit (nach 1 Tag) | 4,3 N/mm², |
| Druckfestigkeit (nach 1 Tag) | 20,8 N/mm², |
| | |
| Biegezugfestigkeit (nach 7 Tagen) | 6,5 N/mm², |
| Druckfestigkeit (nach 7 Tagen) | 29,1 N/mm², |
| | |
| Biegezugfestigkeit (nach 28 Tagen) | 9,2 N/mm², |
| Druckfestigkeit (nach 28 Tagen) | 38,9 N/mm². |

### Beispiel 3

Die folgenden Mischungen wurden homogenisiert und eine Stunde bei 1300 °C gebrannt. Nach dem Aufmahlen des jeweiligen Brennguts auf eine Feinheit von etwa 3200 cm²/g nach Blaine wurden die erhaltenen Mehle mit Wasser im Verhältnis 1 : 1 vermischt. Die Hydratationsreaktionen wurden mittels Wärmeflußcalorimetrie untersucht.

**Tabelle:**

| Rohstoffzusammensetzung der Mischungen I bis III | | | |
|---|---|---|---|
| | Mischung I | Mischung II | Mischung III |
| Bauxit | 9,2 Gew.% | 43,9 Gew.% | -- |
| Manganerz | 39,0 Gew.% | 32,8 Gew.% | 23,7 Gew.% |
| Kalkstein | 51,8 Gew.% | 23,3 Gew.% | 54,5 Gew.% |
| Eisenerz (als Fe₂O₃) | -- | -- | 21,8 Gew.% |

Hierbei zeigte sich, daß das Brenngut der Mischung I nach etwa 10 Minuten ein Hydratationsmaximum bei einem Wärmefluß von 170 mW/g erreicht, während das der Mischung II nach 11 Stunden ein Hydratationsmaximum bei einem Wärmefluß von 16,5 mW/g erreicht. Die Hydratationsreaktion des Brennguts der Mischung III hat nach 10 Minuten mit einem Wärmefluß von 112 mW/g ihr Maximum erreicht. Eine längere Brenndauer bei Mischung III führte zu einer drastischen Abnahme der Reaktionsfähigkeit.

## Patentansprüche

1. Tonerdezement, enthaltend 2CaO•(xAl₂O₃,yMn₂O₃,zFe₂O₃) als Mineral oder in glasiger Form, worin x eine Zahl kleiner 2, y eine Zahl von 0,1 bis 1,4 und z kleiner 4 ist und Mangan in einer Menge von 1 bis 50 Gew.%, berechnet als MnO und bezogen auf das Gewicht des Brennprodukts, vorliegt und das Molverhältnis der CaO-Komponente zu der Summe der übrigen Metalloxide 0,9 bis 2,5 : 1 beträgt.

2. Tonerdezement nach Anspruch 1, **dadurch gekennzeichnet, daß** der Tonerdezement mindestens eine der Phasen manganhaltige Calciumaluminate, Calciumaluminatferratmanganate, Calciummanganate, Calciumaluminiummanganate, Calciumaluminatferratsilicatmanganate, Calciumferratmanganate, Calciummangansilikate und Calciumaluminiummangansulfate enthält.

3. Verfahren zur Herstellung eines Mangan enthaltenden Tonerdezements nach Anspruch 1 durch Vermischen eines Aluminium enthaltenden Einsatzstoffs mit einem Eisen enthaltenden Einsatzstoff und Kalkstein, Brennen des erhaltenen Versatzes und Zerkleinern des Brennprodukts, **dadurch gekennzeichnet, daß** man dem Versatz Mn enthaltende Verbindungen in einer Menge zusetzt, daß das Brennprodukt 1 bis 50 Gew.% Mn, berechnet als MnO, jedweder Oxidationsstufe enthält.

4. Verfahren nach Anspruch 3, **dadurch gekennzeichnet, daß** man den Versatz bei Temperaturen von 1000 bis 1500°C, insbesondere 1100 bis 1350 °C behandelt.

5. Verfahren nach Anspruch 3 oder 4, **dadurch gekennzeichnet, daß** man die Redoxbedingungen während des Brennens so einstellt, daß Mangan im Brennprodukt größtenteils in der Oxidationsstufe +3 auftritt.

6. Verfahren nach Anspruch 3, **dadurch gekennzeichnet, daß** dem Ofenaufgabegut Flußmittel wie Halogenide, Sulfate oder Sulfite zugegeben werden.

## Claims

1. Alumina cement containing 2CaO•(xAl₂O₃, yMn₂O₃, zFe₂O₃) as a mineral or in vitreous form, in which x is an integer of less than 2, y is an integer of 0.1 to 1.4 and z is less than 4 and manganese is present in a quantity of 1 to 50 % by wt., calculated as MnO and based on the weight of the burnt product and the molar ratio of the CaO component to the sum total of the remaining metal oxides is 0.9 to 2.5 : 1.

2. Alumina cement according to claim 1 **characterised in that** the alumina cement contains at least one of the phases of manganese-containing calcium aluminate, calcium aluminates ferrate manganate, calcium manganate, calcium aluminium manganate, calcium aluminate ferrate silicate manganese, calcium ferrate manganate, calcium manganese silicate and calcium aluminium manganese sulphate.

3. Process for the production of a manganese-containing alumina cement according to claim 1 by mixing an aluminium-containing starting product with an iron-containing starting product and limestone, burning the batch thus obtained and comminuting the burnt product **characterised in that** compounds containing Mn are added to the batch in a quantity such that the burnt product contains 1 to 50 % by wt. of Mn, calculated as MnO, of any oxidation stage.

4. Process according to claim 3 **characterised in that** the batch is treated at temperatures of 1,000 to 1500 °C, in particular 1,100 to 1,350.

5. Process according to claim 3 or 4 **characterised in that** the redox conditions of burning are adjusted in such a way that manganese occurs in the burnt product mainly in oxidation stage +3.

6. Process according to claim 3 **characterised in that** fluxes such as halides, sulphates or sulphites are added to the kiln feed.

## Revendications

1. Ciment alumineux, contenant 2CaO.(xAl₂O₃, xMn₂O₃, zFe₂O₃) comme minéral ou sous forme vitreuse, où x est un nombre inférieur à 2, y est un nombre allant de 0,1 à 1,4 et z est inférieur à 4, le manganèse est présent en une quantité allant de 1 à 50% en poids, calculé comme MnO et sur base du poids du produit calciné, et le rapport molaire du composant CaO à la somme de des oxydes métalliques restants s'élève de 0,9 à 2,5:1.

2. Ciment alumineux selon la revendication 1, **caractérisé en ce que** le ciment alumineux contient au moins une des phases aluminate de calcium contenant du manganèse, aluminate-ferrate-mangante de calcium, manganate de calcium, manganate de calcium et d'aluminium, aluminate-ferrate-silicate-mangante de calcium, ferrate-mangante de calcium, silicate de calcium et de manganèse et manganate-sulfate de calcium et d'aluminium.

3. Procédé de préparation d'un ciment alumineux contenant du manganèse selon la revendication 1, par mélange d'une substance de départ contenant de l'aluminium avec une substance de départ contenant du fer et du calcaire, la combustion de la charge obtenue et le broyage du produit calciné, **caractérisé en ce que** l'on ajoute à la charge, des composés contenant du Mn en une quantité telle que le produit calciné contient 1 à 50% en poids de Mn, calculé comme MnO, d'étage d'oxydation quelconque.

4. Procédé selon la revendication 3, **caractérisé en ce que** l'on traite la charge à des températures allant de 1000 à 1500°C, en particulier de 1100 à 1350°C.

5. Procédé selon la revendication 3 ou 4, **caractérisé en ce que** l'on ajuste les conditions rédox pendant la combustion de sorte que le manganèse se présente dans le produit calciné, pour la plus grande partie à l'état d'oxydation +3.

6. Procédé selon la revendication 3, **caractérisé en ce que** l'on ajoute aux produits du four, des agents d'écoulement comme des halogénures, des sulfates ou des sulfites.
